# EUROPÄISCHE PATENTSCHRIFT

(11) **EP 3 416 805 B1**
(45) Veröffentlichungstag und Bekanntmachung des Hinweises auf die Patenterteilung: **19.06.2019**
(21) Anmeldenummer: 18708607.9
(22) Anmeldetag: 20.02.2018
(51) Int. Cl.: B29C 49/46

(54) **VERFAHREN UND VORRICHTUNG ZUR TROCKNUNG VON AUF EINEM ROTIERENDEN BLASRAD ANGEORDNETEN BLASFORMEN ZUR VERMEIDUNG VON KONDENSWASSERBILDUNG**
METHOD AND APPARATUS FOR DRYING BLOW MOLDS ARRANGED ON A ROTATING BLOWING WHEEL TO AVOID THE FORMATION OF CONDENSATION
PROCÉDÉ ET DISPOSITIF DE SÉCHAGE DE MOULES DE SOUFFLAGE DISPOSÉS SUR UNE ROUE DE SOUFFLAGE ROTATIVE AFIN D'ÉVITER LA FORMATION D'EAU DE CONDENSATION

(30) Priorität: 20.02.2017 DE 102017103438
(43) Veröffentlichungstag der Anmeldung: 26.12.2018
(73) Patentinhaber: KHS Corpoplast GmbH, 22145 Hamburg (DE)
(72) Erfinder: BAUMGARTE, Rolf, 22926 Ahrensburg (DE); LINKE, Michael, 22159 Hamburg (DE)
(74) Vertreter: Meissner Bolte Partnerschaft mbB
(86) Internationale Anmeldenummer: PCT/EP2018/054070
(87) Internationale Veröffentlichungsnummer: WO 2018/150036

(56) Entgegenhaltungen:
- EP-A1- 1 647 391
- EP-A1- 2 722 151
- EP-A2- 2 537 663
- US-A- 3 937 609

## Beschreibung

Die Erfindung betrifft Verfahren zur Trockenluftbeaufschlagung einer auf einem rotierenden Blasrad angeordneten Blasform gemäß dem Oberbegriff des Anspruchs 1 und eine Vorrichtung zur Blasformung von Behältern aus thermoplastischem Material gemäß dem Oberbegriff des Anspruchs 8.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Fertigbehältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird zum Beispiel in der Druckschrift DE 43 40 291 A1 erläutert.

Die Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges.

Der grundsätzliche Aufbau einer Blasstation zur Behälterformung wird zum Beispiel in der Druckschrift DE 42 12 583 A1 beschrieben. Möglichkeiten zur Temperaturkonditionierung der Vorformlinge werden in der DE 23 52 926 A1 erläutert. Auf die genannten Schriften wird explizit Bezug genommen und insofern erübrigt sich eine weitere Beschreibung zu Blasstationen und zur Temperaturkonditionierung.

Zur Expansion der temperierten Vorformlinge im Bereich der Blaseinrichtung werden die Vorformlinge in einer das Negativprofil des herzustellenden Behälters abbildenden Blasform gehaltert aufgeblasen. Dafür wird das Blasfluid mit Druck in das Innere des in der Blasform gehalterten Vorformlings eingeleitet, sodass sich die Wandbereiche des Vorformlings an die Innenkontur der Blasform anlegen.

Ein erheblicher Teil der thermischen Energie des Vorformlings wird bei der Blasformung an die Blasform abgegeben. Die Blasform erhitzt dabei stark und muss zur Vermeidung von Verklebungen mit der Behälterwand vor der nächsten Nutzung auskühlen. Die Abkühlung sorgt für einen erhöhten Temperaturunterschied zwischen Vorformling und Blasform, was nicht nur die Gefahr von Verklebungen verringert, sondern auch den Aushärtungsprozess der Behälterwand des fertiggeblasenen Behälters unterstützt. Durch das schnelle Aushärten des Behälters beim Kontakt mit der gekühlten Innenwand der Blasform wird zudem das Einschrumpfen des Behälters nach der Entnahme aus der Blasform verringert.

Um die Durchsatzraten bei der Blasformung der Vorformlinge zu steigern, werden die Blasformen üblicherweise aktiv gekühlt. So können die nötigen Abkühlzeiten verringert werden. Eine aktive Kühlung erfolgt zum Beispiel mit einem durch Kühlkanäle der Blasform geleitetes Kühlfluid, das als Wärmetauscher eingesetzt wird.

Eine Blasform besteht typischerweise aus zwei Blasformhälften und einer Bodenform, wobei die Blasformhälften üblicherweise die Seiten- und Schulterkontur der Behälter definieren und die Bodenform für die Ausformung des üblicherweise mit Standfüßen ausgebildeten Behälterbodens vorgesehen ist. Insbesondere die Bodenform muss stark gekühlt werden, da der Behälterboden im Vergleich zu den übrigen Bereichen des Behälters relativ viel Material und somit eine hohe Speicherkapazität für thermische Energie aufweist.

Typischerweise werden Kühlfluide mit einer Kühltemperatur von 10°C zur Kühlung der Blasform verwendet. Die gekühlten Blasformteile werden somit auf eine Temperatur gekühlt, die unter normalen Bedingungen unterhalb des Taupunktes der Umgebungsluft liegt. Dies führt dazu, dass insbesondere unter feuchten klimatischen Bedingungen, wie zum Beispiel in tropischen Gebieten, die Gefahr von Kondenswasserbildung an den Oberflächen der Blasformteile besteht, was zu Korrosion und Ausbildung von Ablagerungen führen kann.

Zur Vermeidung von Kondenswasserbildung an den Blasformteilen ist aus dem Stand der Technik bekannt, feuchte Umgebungsluft mit Hilfe eines Trockenluftgerätes zu trocknen und über extern zum Blasrad angeordnete Düsenanordnungen auszustoßen, so dass ein Luftschleier um den Bereich des Blasrades ausgebildet wird. Solche Trockenluftgeräte werden stationär außerhalb des rotierenden Bereiches des Blasrades aufgestellt und speisen Trockenluft in ein stationär außerhalb des Blasrades angeordnetes Leitungssystem, mit dem der Trockenluftschleier im Bereich des Blasrades erzeugt wird. Solche extern zum Blasrad erzeugten Trockenluftschleier decken allerdings häufig nicht den gesamten Bereich des Blasrades ab und mithin besteht die Gefahr, dass trotz des Trockenluftschleiers feuchte Luft sensible Bereiche des Blasrades erreicht.

Aus der EP 1 647 391 A1 ist bekannt, dass bei einem Blasrad mit mehreren umfangsbeabstandet daran angeordneten Blasstationen die verbrauchte Blasluft aus den Blasstationen heraus radial nach innen in einen Innenbereich des Blasrades abgelassen wird. Dabei erfolgt das Ablassen in einen inneren Raum des Blasrades, der auf einem Höhenniveau unterhalb der Blasformen angeordnet ist. Die in diesem Raum sich ansammelnde verbrauchte Blasluft strömt dann aus einem nach oben offenen Kessel aus und strömt dabei ungerichtet auch entlang der Blasstationen, sodass die Blasstationen von dieser verbrauchten Blasluft umströmt werden. Es wird dadurch eine Verminderung einer Korrosionsneigung durch Kondenswasserbildung erreicht.

Aufgabe der vorliegenden Erfindung ist die Bereitstellung eines Verfahrens und einer Vorrichtung der eingangs genannten Art, die einen verbesserten Feuchtigkeitsschutz der Blasformen erlauben.

Die Aufgabe wird gelöst durch ein Verfahren mit den Merkmalen des Anspruchs 1 und durch eine Vorrichtung mit den Merkmalen des Anspruchs 8. Vorteilhafte Ausgestaltungen sind in den Unteransprüchen angegeben.

Erfindungsgemäß ist ein Verfahren zur Trockenluftbeaufschlagung einer auf einem rotierenden Blasrad angeordneten Blasform einer Blasstation zur Blasformung von Behältern aus thermoplastischem Kunststoff, bei dem eine Trockenluft in einem auf dem Blasrad gegenüber der Blasform radial nach innen versetzt angeordneten Sammelbehälter gesammelt wird und die Trockenluft aus dem Sammelbehälter heraus mit bezüglich des Blasrades radial nach außen weisender Richtungskomponente auf eine Oberfläche der Blasform gerichtet abgelassen wird.

Die der Erfindung zugrunde liegende Idee ist die Bereitstellung eines Trockenluftschleiers an den Blasformteilen durch Nutzung von auf dem rotierenden Blasrad ohnehin zur Verfügung gestellter Trockenluft. Herkömmliche, extern erzeugte Trockenschleier wirken durch Erzeugung einer Trockenluftwand, die das Eindringen feuchter Luft passiv verhindert. Die erfindungsgemäße Bereitstellung und gezielte Beaufschlagung der Blasformteile mit Trockenluft von radial innerhalb der Blasstationen nach radial außen verdrängt hingegen die feuchte Luft aktiv aus einem zentralen Bereich heraus, was zu einem verbesserten Schutz der Blasstationen und anderer Teile des Blasrades führt.

Im Unterschied zur EP 1 647 391 A1 erfolgt erfindungsgemäß das Ablassen der Trockenluft aus dem Sammelbehälter heraus radial nach außen, während im genannten Stand der Technik das Ablassen radial nach innen erfolgt. Weiterhin erfolgt eine gezielte Abgabe der Trockenluft auf eine Oberfläche der Blasform, während im Stand der Technik die Trockenluft ungerichtet an den Blasstationen vorbeigeführt wird.

Als Trockenluft wird insbesondere ein Gas verstanden, das gegenüber der Umgebungsluft getrocknet ist. Zur Erzeugung einer Trockenluft sind unterschiedliche Verfahren bekannt. Üblicherweise wird ein Gas durch einen mit Trockenmittel gefüllten Bereich geführt und erreicht dadurch einen gewünschten Trockengrad. Der Taupunkt eines Gases kann dabei als Kenngröße für den absoluten Wassergehalt der Trockenluft angesehen werden. Der Taupunkt einer Trockenluft kann zum Beispiel in einem Bereich zwischen minus 30°C und minus 60°C liegen.

Die aktiv gekühlten Bereiche der Blasform sind wegen der hohen Temperaturunterschiede zwischen ihrer Oberfläche und der Umgebung besonders anfällig für die Ausbildung von Kondenswasser. Da die Bodenform üblicherweise besonders stark gekühlt wird, ist die Gefahr von Kondenswasserbildung in diesem Bereich besonders hoch. Es ist also vorzugsweise daran gedacht, die Trockenluft aus dem Sammelbehälter heraus radial nach außen gerichtet auf die Blasformteile der Blasstation, insbesondere auf die Bodenform abzulassen, insbesondere in deren geöffnetem Zustand. Alternativ oder zusätzlich kann die Trockenluft auch auf andere Teile der Blasstation oder des Blasrades gerichtet sein. Das können zum Beispiel Steuerelektronik, Elektro- und/oder Pneumatik-Verteiler, Antriebseinrichtungen und andere gekühlte oder ungekühlte Komponenten sein.

Erfindungsgemäß ist mit Vorteil vorgesehen, dass der Sammelbehälter radial außenliegend Ausströmöffnungen aufweist, die bezüglich ihrer Umfangsverteilung und ihrer Höhenanordnung Blasstationen zugeordnet sind, und aus denen heraus gezielt Trockenluft auf die zu beaufschlagenden Bereiche der Blasstation strömen. Insbesondere ist mit Vorteil vorgesehen, dass wenigstens eine Ausströmöffnung in ihrer Umfangs- und Höhenanordnung und in ihrer Ausrichtung so gewählt ist, dass ein gezielter Trockenluftstrahl auf die Bodenform in deren geöffnetem Zustand abgegeben wird. Analoge Ausströmöffnungen, seien es einzelne Öffnungen oder mehrere zusammenwirkende Öffnungen, können zusätzlich oder alternativ auf die Blasformhälften gerichtet sein. Insbesondere ist mit Vorteil vorgesehen, dass über die Höhe der Blasform verteilt mehrere Ausströmöffnungen übereinander angeordnet sind.

Zur Bereitstellung eines möglichst lückenlosen Trockenluftschleiers im Bereich der Blasstationen kann vorgesehen sein, dass das Blasgas aus dem Sammelbehälter heraus gleichzeitig oder in steuerbarer Abfolge auf mehrere Blasformen unterschiedlicher auf dem Blasrad angeordneter Blasstationen abgeblasen wird.

Das Ablassen der Blasluft aus dem Sammelbehälter kann mittels verschließbarer Ventile gesteuert sein. Das gezielte Öffnen und Schließen der Ventile kann dabei mittels Steuersignalen eines Steuergerätes der Blasmaschine erfolgen. In einer ersten denkbaren Variante ist daran gedacht, dass der Sammelbehälter Öffnungen aufweist, durch die die Trockenluft in Richtung auf die Blasformteile abgelassen wird. Die Öffnungen können beispielsweise ständig offene Durchbrüche der Sammelbehälterwand sein. Das Ablassen der Trockenluft kann gesteuert, also durch steuerbare Düsen oder Ventile ausgeführt sein. Alternativ oder zusätzlich kann das Ablassen der Trockenluft ungesteuert ausgeführt sein, derart, dass ein durch das Einleiten von Trockenluft in den Sammelbehälter entstehender Überdruck die Trockenluft zum Entweichen durch die Öffnungen zwingt.

In einer bevorzugten Ausführungsform ist daran gedacht, dass die Trockenluft in einem gemeinsamen Sammelbehälter gesammelt wird, aus den heraus die Trockenluft gleichzeitig oder in steuerbarer Abfolge auf sämtliche der auf dem Blasrad angeordneten Blasformen unterschiedlicher Blasstationen abgelassen wird.

In dieser Ausführungsform ist ein gemeinsamer, insbesondere ein einziger gemeinsamer Sammelbehälter vorgesehen, der zur Bereitstellung eines Trockenluftschleiers für alle auf dem Blasrad getragenen Blasformen eingerichtet ist. Dabei kann insbesondere vorgesehen sein, dass der Sammelbehälter aus einem ersten, auf dem Blasrad angeordneten mitrotierenden Behälterteil und einem zweiten, stationär gegenüber dem Blasrad angeordneten feststehenden Behälterteil besteht, wobei die beiden Behälterteile kommunizierend verbunden sind. In dem stationären Teil des Sammelbehälters, der insbesondere als Teil eines Maschinengestells ausgebildet sein kann, können beispielsweise weitere, zum Blasrad periphere Komponenten angeordnet sein, die durch die innere Trockenluftumgebung vor Feuchtigkeitseinfluss geschützt sind. Insbesondere ist vorgesehen, dass der mitrotierende Behälterteil und der stationäre Behälterteil in ständiger gasübertragender Verbindung stehen, sodass dauerhaft während der Rotation des Blasrades eine Diffusion der Trockenluft zwischen diesen Teilen stattfinden kann. Die beiden Behälterteile erfassen demnach ein gemeinsames Volumen, wobei die Behälterteile insbesondere durch eine Öffnung in einer Wand, wie zum Beispiel der Bodenwand des Blasrades miteinander verbunden sind.

Bei der Ausbildung des Sammelbehälters aus einem mitrotierenden und einem feststehenden Behälterteil kann die Trockenluft zusätzlich oder alternativ in den feststehenden Behälterteil eingespeist werden. Die dort eingespeiste Trockenluft erreicht über eine gasübertragende Verbindung auch den mitrotierenden Teil.

Es versteht sich, dass ein einzelner oder mehrere Sammelbehälter bevorzugt symmetrisch zur Drehachse des Blasrades auf dem Blasrad angeordnet sind, um eine Unwucht bei der Rotation zu vermeiden. Alternativ könnten Gegengewichte oder andere Bauteile auf dem Blasrad angeordnet werden, um eine symmetrische Massenverteilung zu erreichen.

Bei Verwendung eines einzelnen gemeinsamen Sammelbehälters kann vorgesehen sein, dass die Außenwand des Sammelbehälters die Drehachse des Blasrades umspannt und einen sich über das Zentrum des Blasrades erstreckenden Innenraum begrenzt. Alternativ ist auch denkbar, dass der Sammelbehälter einen gemeinsamen ringspaltförmigen Raum ausbildet, der sich um das Zentrum des Blasrades herum erstreckt.

Ein weiterer Vorteil der erfindungsgemäßen Verteilung von Trockenluft aus einem auf dem rotierenden Blasrad angeordneten Sammelbehälter ist die einfache Möglichkeit, das in diesem Bereich bereits zur Verfügung stehende Blasgas als Trockenluft zu verwenden. Entsprechend kann in einer Ausführungsvariante vorgesehen sein, dass als Trockenluft ein für die Blasformung bereitgestelltes Blasgas verwendet wird.

Als Blasluft wird von vornherein ein sehr trockenes Gas verwendet, um bei der Einleitung in den erhitzten Vorformling unerwünschte Feuchtigkeit im Inneren des Behälters zu vermeiden. Durch die Verwendung eines auf dem Blasrad verfügbaren Blasgases kann ein zusätzliches Trockenluftgerät kleiner dimensioniert werden oder bei ausschließlicher Nutzung des Blasgases völlig entfallen. Die alternative oder zusätzliche Nutzung von Blasgas nutzt Synergieeffekte und kann damit zur Senkung der Betriebskosten der Blasmaschine und zur Reduzierung der Bauteilkomplexität beitragen, was auch die Herstellungskosten der Blasmaschine senkt.

Ein wesentlicher Anteil der laufenden Betriebskosten für die blastechnische Herstellung der Behälter resultiert aus der Bereitstellung des erforderlichen Blasgases. Zur Reduzierung der Betriebskosten ist es beispielsweise bekannt, die verwendete Blasluft mehrfach zu verwenden und verbrauchtes Blasgas eines hohen Druckniveaus auf einem niedrigeren Druckniveau erneut der Behälterformung zuzuführen. Bei der Verwendung von Blasgas zur Beaufschlagung der Blasformteile mit einem Trockenluftschleier ist daran gedacht, das in dem pneumatischen Leitungssystem der Blasstation zur Verfügung stehende komprimierte Blasgas bei der Entspannung des Behälters nach der Blasformung in den Sammelbehälter zu leiten, aus dem das Blasgas alsdann zur Erzeugung eines Trockenluftschleiers abgelassen werden kann.

Eine weitere Reduzierung der Betriebskosten kann somit durch die Weiternutzung von bereits zur Blasumformung in einen Vorformling eingeleitetem Blasgas erzielt werden. Dafür ist konkret daran gedacht, dass der Sammelbehälter mit Blasgas befüllt wird, welches nach dem Blasumformen eines erhitzten, innerhalb der Blasform gehaltenen Vorformlings aus einer mit dem Innenraum des fertiggeblasenen Behälters kommunizierenden Entlüftungsleitung entnommen wird.

Zur Steuerung der Blasgaszufuhr kann in der Entlüftungsleitung ein die Leitung beherrschendes Absperrventil vorgesehen sein, welches mechanisch mittels stationär zum Blasrad angeordnete Steuerkurven und/oder elektrisch mittels Steuersignalen eines Steuergerätes der Blasmaschine steuerbar ist.

Bei diesem Blasgasrecycling wird das in dem fertiggeblasenen Behälter komprimierte Blasgas vor der Öffnung der Blasformen nicht wie üblich in die Atmosphäre abgeleitet, sondern zur Trocknung der Blasformteile in den Sammelbehälter geleitet und dann zur gezielten Abgabe radial nach außen in Richtung der Blasformen weiterverwendet.

Das Blasgas kann alternativ oder zusätzlich aus einer Blasgaszuleitung entnommen werden, die während der Entlüftung der fertiggeblasenen Behälter weiterhin komprimiertes Blasgas enthält. Stromaufwärts vor einem Absperrventil, das nach dem Fertigblasen geschlossen wird, kann das von einer Blasgaszufuhr auf dem Blasrad bereitgestellte Blasgas also bedarfsweise entnommen werden, um den Sammelbehälter mit der für die Bereitstellung des Trockenluftschleiers nötigen Trockenluftmenge aufzufüllen. Somit kann der Sammelbehälter auch unabhängig von einem Blasgasrecycling und unabhängig von der Entlüftung des fertiggeblasenen Behälters mit Blasgas gespeist werden.

Eine Entnahme des Blasgases aus einer von der Entlüftungsphase unabhängigen Blasgaszuleitung bietet sich beispielsweise an, wenn das nach der Blasumformung in dem Vorformling komprimiert vorliegende Blasgas bereits für andere Zwecke verwendet wird, aus anderen technischen Gründen nicht für die Ableitung in den Sammelbehälter verwendbar ist oder nicht ausreicht für die Erzeugung eines effektiven Trockenschleiers.

Grundsätzlich kann Blasgas zur Befüllung des Sammelbehälters auch vor der Einspeisung in einen Drehverteiler zur Bereitstellung auf dem Blasrad aus dem Blasgasleitungssystem entnommen werden. Das bietet sich insbesondere an, wenn Blasgas in einen feststehenden Teil des Sammelbehälters eingespeist wird, der in gasübertragender Verbindung mit einem mitrotierenden Behälterteil des Sammelbehälters steht.

Insbesondere bei der Verwendung von Blasgas, das bei der Entlüftung der Blasformen anfällt und somit immer nur zur Entlüftungszeit, also takt- bzw. stoßweise in den Sammelbehälter eingeleitet wird, kann vorgesehen sein, dass der Sammelbehälter ausgebildet und eingerichtet ist, dass der sich mit der Einleitung des Blasgases in den Sammelbehälterraum entwickelnde Überdruck über einem bestimmten Druckniveau gehalten wird. Bei einem anhaltenden Überdruck des Blasgases im Sammelbehälter kann ein kontinuierlicher und pulsationsreduzierter Trockenluftstrom bereitgestellt werden. Dafür können beispielsweise die Auslässe des Sammelbehälters derart dimensioniert oder einstellbar sein, dass die in den Sammelbehälterraum eingeleitete Trockenluft auf einem Druckniveau gehalten wird, das oberhalb des Umgebungsdruckes liegt. Es können auch zusätzliche, insbesondere druckregulierte Zuleitungen zur Einspeisung von komprimiertem Blasgas aus der zentralen Blasgaszufuhr des Blasrades in den Sammelbehälter vorgesehen sein, um das Druckniveau innerhalb des Sammelbehälters bedarfsweise zu erhöhen.

Bei der Weiternutzung von zur Blasumformung in den Vorformling eingeleitetem Blasgas wird der Sammelbehälter stoßweise mit Blasgas befüllt, und zwar regelmäßig bei der Entspannung des fertiggeblasenen Behälters, kurz vor der Öffnung der Blasform. Das kann zu einem pulsierenden Ablassen des Blasgases aus dem Sammelbehälter führen. Um die Pulsation möglichst gering zu halten, kann vorgesehen sein, dass der Sammelbehälter mit Blasgas mehrerer auf dem Blasrad angeordneter Blasstationen befüllt wird, wobei das Blasgas jeweils nach dem Blasformen eines erhitzten, innerhalb der Blasform einer der Blasstationen gehaltenen Vorformlings aus einer mit dem Innenraum des fertiggeblasenen Behälters kommunizierenden Entlüftungsleitung entnommen wird.

In einer weiteren Ausführungsform ist daran gedacht, dass auf dem Blasrad mehrere Sammelbehälter oder ein gemeinsamer Sammelbehälter angeordnet sind, die jeweils einer Gruppe unterschiedlicher oder sämtlicher Blasstationen des Blasrades zugeordnet sind.

Erfindungsgemäß ist zudem eine Vorrichtung zur Blasformung von Behältern aus thermoplastischem Material, die mindestens eine auf einem rotierenden Blasrad angeordnete Blasstation mit einer Blasform aufweist, wobei die Blasstation ein pneumatisches Leitungssystem zur Einleitung eines Blasgases in einen erhitzten, in die Blasform einsetzbaren Vorformling aufweist, und wobei die Vorrichtung des Weiteren einen auf dem Blasrad relativ zur Blasform radial nach innen versetzt angeordneten Sammelbehälter zur Aufnahme von Trockenluft aufweist, und wobei der Sammelbehälter mindestens einen Gasauslass aufweist, mittels dem die in dem Sammelbehälter aufgenommene Trockenluft mit einer radial nach außen weisenden Richtungskomponente gezielt auf eine Oberfläche der Blasform ablassbar ist.

Details zur Ausgestaltung und Vorzüge der erfindungsgemäßen Vorrichtung ergeben sich auch anhand der Erläuterungen zum erfindungsgemäßen Verfahren. Auf Wiederholungen zu denkbaren Ausführungsformen der erfindungsgemäßen Vorrichtung wird insofern verzichtet.

Für ein Blasgasrecycling ist daran gedacht, dass der Innenraum des Sammelbehälters und der Innenraum des fertiggeblasenen Behälters kommunizierend verbindbar sind. Das kann beispielsweise über eine Zweigleitung erreicht werden, die eine zur Blasformung vorgesehene Blasgaszuleitung mit dem Sammelbehälter verbindet, wobei die Zweigleitung vorzugsweise von einem steuerbaren Absperrventil beherrscht wird. Das Absperrventil kann für die Blasformung geschlossen werden, sodass während dieser Phase kein Blasgas in den Sammelbehälter abgeleitet wird. Es kann statt einer Zweigleitung auch eine direkte gasübertragende Verbindung zwischen dem Innenraum des fertiggeblasenen Behälters mit dem Sammelbehälter vorgesehen sein, die zur Entlüftung des Behälters nach der Blasformung zum Beispiel mittels eines Absperrventils geöffnet wird.

Zur Verwendung eines Sammelbehälters, der sich zur Trockenluftbeaufschlagung gleich mehrerer Blasformen unterschiedlicher Blasstationen eignet, ist daran gedacht, dass der Sammelbehälter mehrere Gasauslässe aufweist, mittels derer die in dem Sammelbehälter aufgenommene Trockenluft gleichzeitig oder in steuerbarer Abfolge gezielt radial nach außen in Richtung der Blasformen oder in Richtung jeweils eines Blasformteils der Blasformen mehrerer Blasstationen ablassbar ist.

Eine möglichst pulsationsarme und gleichmäßige Beaufschlagung der Blasformen mit trockener Blasluft kann dadurch erreicht werden, dass der Innenraum des Sammelbehälters und die Innenräume fertiggeblasener Behälter mehrerer Blasstationen kommunizierend verbindbar sind.

In einer bevorzugten Ausführungsform ist daran gedacht, dass der Sammelbehälter als ein gemeinsamer Sammelbehälter ausgebildet ist, der mehrere Gasauslässe aufweist mittels derer das in den Sammelbehälter aufgenommene Blasgas gleichzeitig oder in steuerbarer Abfolge radial nach außen in Richtung der Blasformen oder in Richtung jeweils eines Blasformteils der Blasformen sämtlicher auf dem Blasrad angeordneter Blasstationen ablassbar ist.

In einer bevorzugten Ausführungsform ist daran gedacht, dass der Sammelbehälter aus einem ersten, auf dem Blasrad angeordneten mitrotierenden Behälterteil und einem zweiten, stationär gegenüber dem Blasrad angeordneten feststehenden Behälterteil besteht, wobei die beiden Behälterteile kommunizierend verbunden sind. Der stationäre Behälterteil kann insbesondere ein Teil des Maschinengestells sein, welches das Blasrad drehgelagert trägt. In dem stationären Behälterteil können Komponenten der Blasmaschine wie zum Beispiel elektrische Versorgungskomponenten, Steuergeräte oder dergleichen angeordnet sein, die durch die Beaufschlagung mit der im Sammelbehälter befindlichen Trockenluft ebenfalls gegen Feuchtigkeit geschützt sind.

Weiter bevorzugt ist daran gedacht, dass als Trockenluft ein für die Blasformung bereitgestelltes Blasgas verwendet wird. Dies unterstützt unter anderem das Blasgasrecycling, wie bereits erläutert. Im Übrigen kann das gezielte Entlüften der Vorformlinge in den Sammelbehälter auch zur Lärmreduzierung dienen. Das stoßweise Öffnen einer Entlüftungsleitung der Blasform erzeugt ein lautes Entlüftungsgeräusch, was üblicherweise mit einem Schalldämpferelement reduziert wird, um den Geräuschpegel in der Umgebung der Blasmaschine zu verringern. Durch die Verlegung des Entlüftungsauslasses in den Sammelbehälter werden die Entlüftungsgeräusche noch weiter reduziert.

Ausführungsbeispiele und Details der Erfindung werden im Folgenden mit Bezug auf schematisierte Figuren näher erläutert. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Vorformlingen zu Behältern mit angrenzender Heizvorrichtung zur Temperaturkonditionierung der Vorformlinge,
- Fig. 4: ein Blasrad mit auf dem Blasrad an verschiedenen Blasstationen angeordneten Blasformen mit mehreren Trockenluftsammelbehältern,
- Fig. 5: ein Blasrad mit auf dem Blasrad angeordneten Blasformen mit einem gemeinsamen Trockenluftsammelbehälter, und
- Fig. 6: ein Ausführungsbeispiel eines Blasrades mit einem erfindungsgemäßen Sammelbehälter.

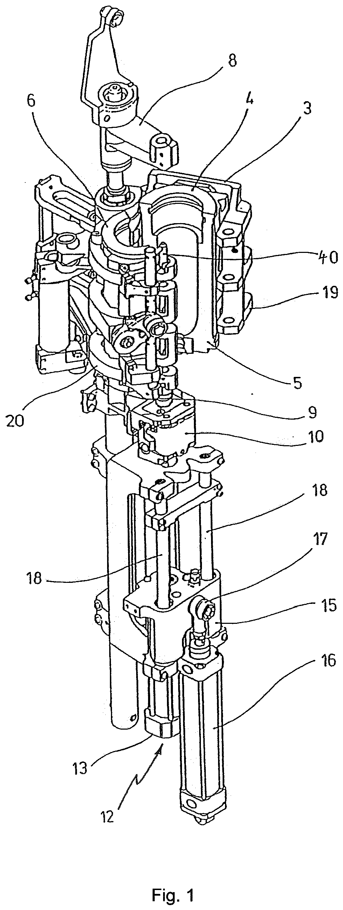

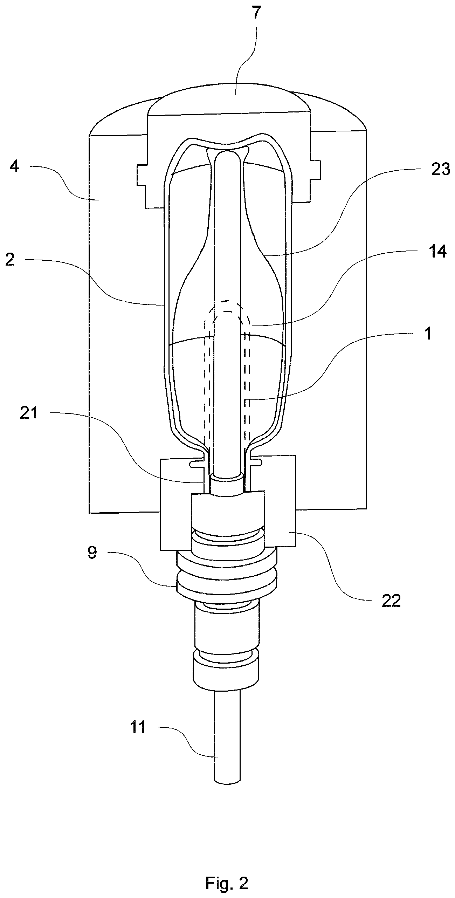

Der prinzipielle Aufbau einer Vorrichtung zur Umformung von Vorformlingen 1 in Behälter 2 ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Halteelement 9 fixiert sein. Dieses Halteelement 9 kann z.B. erfindungsgemäß oder wie im Stand der Technik bekannt ausgebildet sein. Es ist beispielsweise möglich, den Vorformling 1 über Zangen oder andere Handhabungsmittel direkt in die Blasform 4 einzusetzen. Zur Ermöglichung einer Druckluftzuleitung ist unterhalb der Blasform 4 ein Anschlusskolben 10 angeordnet, der dem Vorformling 1 Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig, wenn mehrere Blasstationen 3 auf einem rotierenden Blasrad 25 angeordnet sind.

Bei der in Fig. 1 dargestellten Ausführungsform ist das Recksystem derart ausgebildet, dass eine Tandemanordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40. Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

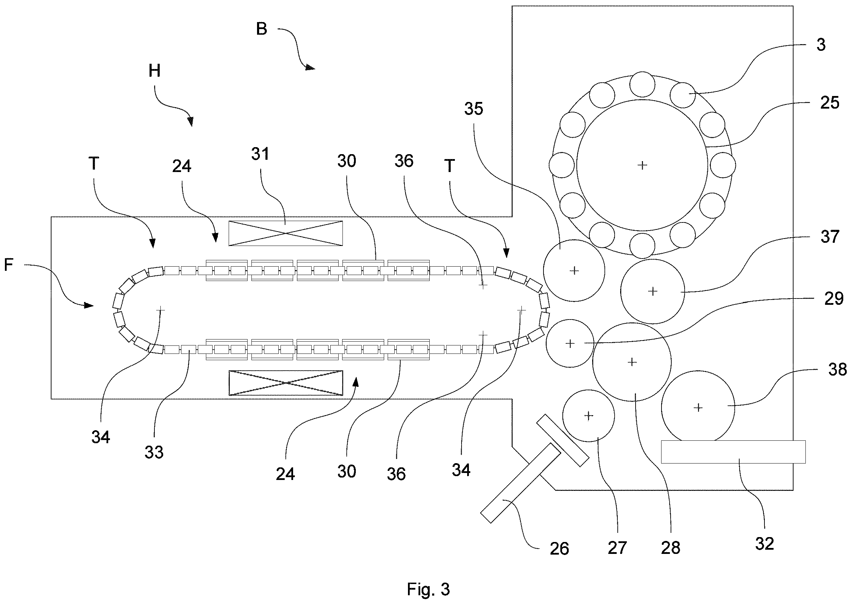

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 als Heizeinrichtungen sowie Gebläse 31 angeordnet, um die Vorformlinge 1 zu temperieren. Nach einer ausreichenden Temperierung der Vorformlinge 1 werden diese von einem Übergaberad 35 an das Blasrad 25 übergeben, in dessen Bereich die Blasstationen 3 angeordnet sind. Die fertig geblasenen Behälter 2 werden von weiteren Übergaberädern 37, 28, 38 einer Ausgabestrecke 32 zugeführt. Das Übergaberad 37 ist dabei als ein Entnahmerad und das Übergaberad 38 als ein Ausgaberad ausgebildet.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET (Polyethylenterephthalat), PEN (Polyethylennaphthalat) oder PP (Polypropylen).

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 Teil des Transportweges der Vorformlinge 1 ist. Der Transport der Vorformlinge 1 erfolgt in der Aufheizvorrichtung H mittels einer Vielzahl umlaufender Transportelemente 33, die kettenartig aneinandergereiht und entlang von Umlenkrädern 34, 36 geführt sind. Die umlaufenden Transportelemente 33 bewegen sich also entlang einer Kettenbahn 55, die auch die Transportbahn der Vorformlinge bildet, da die Vorformlinge 1 entlang der Kettenbahn 55 geführt sind. Insbesondere ist daran gedacht, durch die kettenartige Anordnung der Transportelemente 33 eine im Wesentlichen rechteckförmige Grundkontur aufzuspannen. Bei der dargestellten Ausführungsform werden im Bereich der dem Übergaberad 27 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 27 und des Blasrades 25 relativ zueinander erweist sich die dargestellte Anordnung als besonders zweckmäßig, da im Bereich der entsprechenden Ausdehnung des Transportweges 55 drei Umlenkräder 34, 36 positioniert sind, und zwar jeweils die kleineren Umlenkräder 36 im Bereich der Überleitung zu den linearen Verläufen des Transportweges 55 und das größere Umlenkrad 34 im unmittelbaren Übergabebereich zum Übergaberad 27 und zum Blasrad 25. Alternativ zur Verwendung von kettenartigen Transportelementen 33 ist es beispielsweise auch möglich, ein rotierendes Heizrad zu verwenden.

Nach einem fertigen Blasen der Behälter 2 werden diese vom Übergaberad 38 aus dem Bereich der Blasstationen 3 herausgeführt und zur Ausgabestrecke 32 transportiert.

Ein Transport der Vorformlinge 1 und der Behälter 2 durch die Blasmaschine B kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe 26 mit seiner Mündung in lotrechter Richtung nach oben orientiert zugeführt, anschließend gedreht, entlang der Heizstrecke 24 und des Blasrades 25 mit seiner Mündung in lotrechter Richtung nach unten orientiert gefördert und vor einem Erreichen der Ausgabestrecke 32 wieder gedreht. Gemäß einer anderen Variante wird der Vorformling 2 im Bereich der Heizstrecke 24 mit seiner Mündung in lotrechter Richtung nach unten orientiert beheizt, vor Erreichen des Blasrades 25 jedoch wieder um 180° gedreht.

Gemäß einer dritten Ausführungsvariante durchläuft der Vorformling den gesamten Bereich der Blasmaschine B ohne Durchführung von Wendevorgängen mit seiner Mündung in lotrechter Richtung nach oben orientiert.

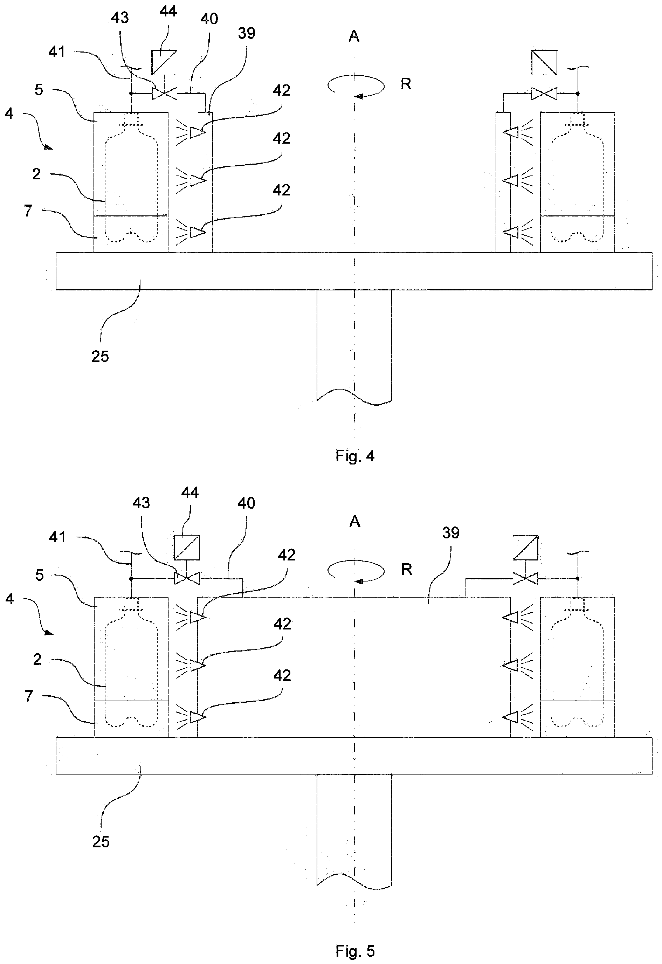

Fig. 4 zeigt schematisch eine erfindungsgemäße Anordnung einer Blasform 4 auf einem rotierenden Blasrad 25 mit einem gegenüber der Blasform 4 radial nach innen versetzt angeordneten Sammelbehälter 39. Im dargestellten Beispiel sind auf dem Blasrad 25 zwei Blasstationen mit jeweils einer Blasform 4 gezeigt, denen jeweils ein Sammelbehälter 39 zur Trockenluftschleierbildung im Bereich der Blasformen 4 zugeordnet ist. Zur zeichnerischen Vereinfachung sind nur zwei Blasstationen abgebildet. Es versteht sich, dass auf dem Blasrad 25 eine Vielzahl von Blasstationen angeordnet sein können. Ebenfalls zur zeichnerischen Vereinfachung werden Bezugszeichen für zwischen den Blasstationen gleichen Elementen nur an einer Blasstation verwendet.

Fig. 5 zeigt im Unterschied zu dem Beispiel aus Fig. 4 ein rotierendes Blasrad 25 mit einem gemeinsamen Sammelbehälter 39, der zur Trockenluftschleierbildung im Bereich aller auf dem Blasrad 25 angeordneten Blasformen 4 vorgesehen ist. Blasluft wird dafür bevorzugt aus den pneumatischen Leitungssystemen jeder Blasstation entnommen und in den gemeinsamen Innenraum des gemeinsamen Sammelbehälters 39 eingeleitet. Alternativ oder zusätzlich kann die Blasluftzuführung in den gemeinsamen Sammelbehälter 39 auch unabhängig von den jeweiligen pneumatischen Leitungssystemen der einzelnen Blasstationen erfolgen. Dafür kann die Blasluft zum Beispiel zentral von einer auf dem Blasrad 25 verfügbaren Blasluftzufuhr entnommen werden (nicht gezeigt). Gleiches gilt für die Verwendung einzelner, jeweils einer Blasstation oder jeweils einer Gruppe von Blasstationen zugeordneten Sammelbehältern 39.

Wie in Fig. 4 angedeutet, rotiert das Blasrad 25 um die Drehachse A in Umlaufrichtung R. Stark vereinfacht ist dargestellt, dass die Blassform 4 einen fertiggeblasenen Behälter 2 umschließt, dessen Innenraum mittels einer Entlüftungsleitung 40 mit dem Innenraum eines Sammelbehälters 39 kommunizierend verbindbar ist. Die Entlüftungsleitung 40 wird von einem Absperrventil 43 beherrscht, welches durch Ansteuerung mittels eines Signalumsetzers 44 geöffnet bzw. geschlossen werden kann.

In der Geschlossenstellung des Absperrventils 43 kann ein mittels einer Blasgaszuleitung 41 bereitgestelltes komprimiertes Blasgas zur Blasformung des Behälters 2 in einen in der Blasform 4 gehaltenen Vorformling 1 (nicht dargestellt) eingeleitet werden, und zwar ohne Verlust des Blasgases in den Sammelbehälter 39. Üblicherweise wird der Behälter mit einem Blasdruck von bis zu 40 bar expandiert. Nach der Blasumformung des Vorformlings 1 in den Behälter 2 wird das in dem Behälter 2 vorhandene komprimierte Blasgas abgelassen, damit die Blasform 4 zur Freigabe und ohne Beschädigung des fertiggeblasenen Behälters 2 geöffnet werden kann. Zur Entlüftung des Behälters 2 wird zunächst die Blasgaszuleitung 41 von einer auf dem Blasrad 25 zentral zur Verfügung gestellten Blasgaszufuhr (nicht dargestellt) getrennt und das in dem Behälter 2 vorhandene komprimierte Blasgas wird über die Entlüftungsleitung 40 in den Sammelbehälter 39 abgeleitet. Dafür wird das Absperrventil 43 geöffnet.

Das in den Sammelbehälter 39 eingeleitete Blasgas kann zur Erzeugung eines Trockenluftschleiers im Bereich der Blasform 4 mittels Gasauslässen 42 mit radial nach außen weisender Richtungskomponente in Richtung der Blasform 4 geblasen werden. Wie angedeutet, können mehrere Gasauslässe 42 an dem Sammelbehälter 39 vorgesehen sein, die unterschiedliche Zonen bzw. unterschiedliche Blasformteile 7, 5 mit Blasgas beaufschlagen. Dazu sind die Gasauslässe entsprechend hohen- und umfangsverteilt am Sammelbehälter 39 vorgesehen und die Richtung auf die zu beaufschlagenden Zonen bzw. Blasformteile 7, 5 ausgerichtet. In der vorliegenden schematischen Seitendarstellung ist lediglich eine erste Formhälfte 5 stilisiert gezeigt. Die zweite Formhälfte 6 ist von der der ersten Formhälfte 5 verdeckt.

Der Sammelbehälter 39 ist gegenüber der Blasform 4 radial nach innen versetzt auf dem Blasrad 25 angeordnet. Die Gasauslässe 42 sind derart ausgerichtet, dass das Blasgas aus dem Sammelbehälter 39 radial nach außen weisend auf die Oberfläche der Blasform 4 abgeblasen werden kann. Die Form der Gasauslässe 42 kann unterschiedlich ausgeführt sein. Denkbar sind Düsen, die in die Wand des Sammelbehälters 39 eingesetzt sind. Es kann zusätzlich oder alternativ auch vorgesehen sein, dass von dem Sammelbehälter 39 Zweigleitungen in Richtung der Blasform 4 verlaufen, mit denen die in dem Sammelbehälter 39 eingeleitete Blasluft in bestimmte Zonen der Blasform 4 geleitet wird, die besonders stark gekühlt werden und insofern einen hohen Trockenluftstrom zur Vermeidung von Kondenswasserbildung benötigen. Insbesondere ist die Bodenform 7 stark gekühlt, sodass gegebenenfalls ein höherer Volumenstrom an trocknender Blasluft auf der Oberfläche der Bodenform 7 benötigt wird. Der Sammelbehälter 39 kann insbesondere auch derart ausgebildet sein, dass die trocknende Blasluft zur Erzeugung eines Trockenluftschleiers ausschließlich bzw. zum überwiegenden Teil in Richtung der Bodenform 7 abgeblasen wird.

Das Ausführungsbeispiel nach Fig. 5 unterscheidet sich von dem Ausführungsbeispiel der Fig. 4 lediglich darin, dass ein gemeinsamer statt einzelner Sammelbehälter 39 vorgesehen ist. In dem gezeigten Beispiel ist vorgesehen, dass in dem gemeinsamen Sammelbehälter 39 die bei der Entlüftung eines fertiggeblasenen Behälters 2 in dem jeweils mit dem Innenraum des Behälters 2 kommunizierend in Verbindung stehenden pneumatischen Leitungssystem vorhandene komprimierte Blasluft der einzelnen auf dem Blasrad 25 angeordneten Blasstationen zentral gesammelt wird. Die Einspeisung der Blasluft in den gemeinsamen Sammelbehälter 39 erfolgt dabei taktweise, und zwar in Abfolge der Entlüftungsvorgänge der einzelnen Blasstationen, die sich der Blasformung des Behälters 2 jeweils anschließen.

Wie auch in Fig. 4 gezeigt, können einzelne Entlüftungsleitungen 40 von den pneumatischen Systemen der einzelnen Blasstationen in den gemeinsamen Sammelbehälter 39 münden, die zur Entlüftung eines fertiggeblasen Behälters 2 mittels eines Absperrventils 43 gesteuert geöffnet und bei der Blasformung des Behälters 2 geschlossen werden können.

Die Beaufschlagung der Blasformen 4 mit einem trocknenden Luftschleier aus Blasluft erfolgt in diesem Beispiel zentral aus dem gemeinsamen Sammelbehälter 39, wobei das Ablassen der Blasluft aus dem Sammelbehälter 39 radial nach außen in Richtung der Blasformen 4 gleichzeitig oder in gesteuerter Abfolge erfolgen kann.

In Fig. 5 ist angedeutet, dass der gemeinsame Sammelbehälter 39 als ein den zentralen Raum auf dem Blasrad 25 einschließendes Gehäuse ausgebildet ist. Denkbar ist auch, dass der Sammelbehälter 39 einen Ringspaltraum einschließt, der sich kreisförmig um die Drehachse A des Blasrades 25 herum erstreckt.

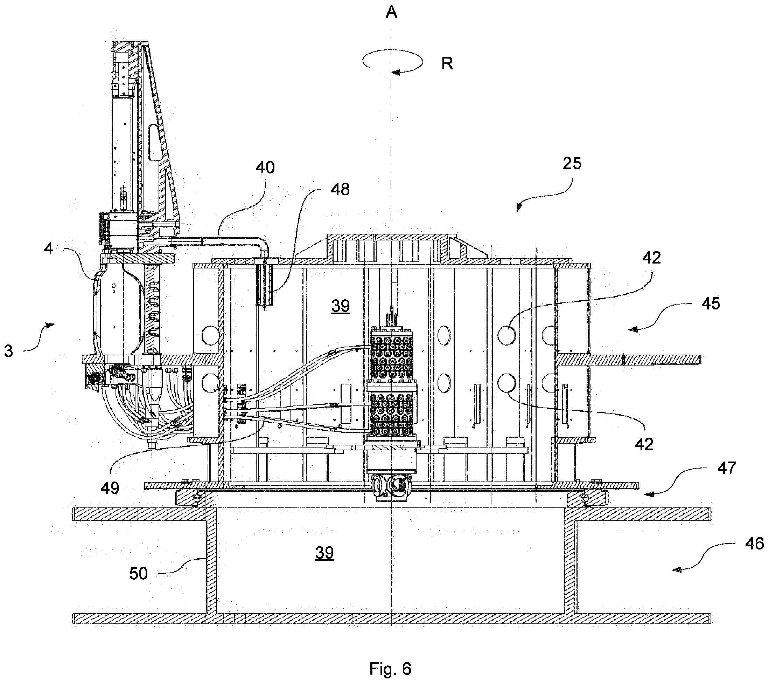

Fig. 6 zeigt ein Ausführungsbeispiel eines Blasrades 25 mit einem gemeinsamen Sammelbehälter 39, der aus einem ersten, mitrotierenden Behälterteil 45 und einem zweiten, feststehenden Behälterteil 46 besteht. Das Raumvolumen des gemeinsamen Sammelbehälters 39 wird durch den Innenraum des mitrotierenden Behälterteils 45 und den Innenraum des feststehenden Behälterteils 46 ausgebildet.

Der feststehende Behälterteil 46 kann - wie vorliegend angedeutet - Teil eines Maschinengestells 50 sein, welches das Blasrad 25 drehgelagert trägt. Das rotierende Blasrad 25 ist im gezeigten Ausführungsbeispiel mittels eines Kugeldrehverteilers 47 drehbar an dem Maschinengestell 50 gelagert. Das Blasrad 25 weist in seinem zentralen Bereich einen etwa zylindrischen Raumbereich auf, der den mitrotierenden Behälterteil 45 des Sammelbehälters 39 ausbildet. Der mitrotierende Behälterteil 45 ist mit einem Durchbruch im Bodenbereich des Blasrades 25 kommunizierend mit dem feststehenden Behälterteil 46 verbunden, sodass während der Rotation des Blasrades 25 ein Luftmassenaustausch zwischen beiden Behälterteilen stattfinden kann.

Wie bereits zu den Ausführungsbeispielen der Fig. 4 und 5 erläutert, trägt das Blasrad 25 Blasstationen 3 mit jeweils einer Blasform 4. Aus Gründen der Übersichtlichkeit ist im vorliegenden Ausführungsbeispiel lediglich eine einzige Blasstation 3 gezeigt. Es versteht sich, dass das Blasrad 25 eine oder mehrere, insbesondere um seinen Umfang verteilt, angeordnete Blassstationen 3 tragen kann.

In dem Ausführungsbeispiel der Fig. 6 ist vorgesehen, dass der Sammelbehälter 39 mit dem zur Blasformung eines Behälters genutzten Blasgas befüllt wird. Dafür ist der Innenraum eines in der Blasform 4 gehaltenen Behälters 2 (nicht dargestellt) mittels einer Entlüftungsleitung 40 mit dem Innenraum des Sammelbehälters 39 kommunizierend verbindbar.

Vorliegend mündet die Entlüftungsleitung 40 in eine Schalldämpfereinrichtung 48. Die Schalldämpfereinrichtung 48 ist ausgebildet und eingerichtet, die bei der Entlüftung des unter Druck stehenden fertiggeblasenen Behälters 2 entstehenden Entlüftungsgeräusche zu verringern. Bei herkömmlichen Blasradaufbauten wird das in dem fertiggeblasenen Behälter 2 vorhandene komprimierte Blasgas über eine Schalldämpfereinrichtung 48 direkt in die Umgebungsluft entlassen. Im vorliegenden Fall wird das in dem Behälter komprimierte Blasgas stattdessen zur Ausbildung eines Trockenluftschleiers weiterverwendet. Einerseits sorgt dieses Blasgasrecycling für eine Steigerung der Energieeffizienz der Blasmaschine und andererseits kann durch die Integration der Schalldämpfereinrichtung 48 in den Innenraum des Sammelbehälters 39 der Geräuschpegel im Umgebungsbereich der Blasmaschine weiter verringert werden.

Das in den Sammelbehälter 39 eingeleitete Blasgas wird über radial außen liegende Gasauslässe 42 mit gegenüber der Drehachse A des Blasrades 25 radial nach außen gerichteter Richtungskomponente in Richtung auf die Blassstationen 3 aus dem Sammelbehälter 39 abgelassen. Damit wird während der Rotation des Blasrades 25 ein von innen nach außen gerichteter Trockenluftschleier im Bereich der Blassstationen 3 erzeugt. Durch den im Sammelbehälter 39 vorherrschenden Überdruck wird jegliches Eindringen von feuchter Umgebungsluft verhindert. Im Bereich der gegenüber der Drehachse A des Blasrades radial außen liegenden Blassstationen 3 wird aktiv für eine Verdrängung feuchter Umgebungsluft gesorgt. Vorliegend sind die Gasauslässe 42 als Durchbrüche der Seitenwandung des Sammelbehälters 39, insbesondere als Durchbrücke des mitrotierenden Behälterteils 45 des Sammelbehälters 39, ausgebildet. Durch die Wahl des Durchmessers der Gasauslässe 42 und/oder durch die Verwendung von Düsenelementen an den Gasauslässen 42 können Richtung und Geschwindigkeit der aus dem Sammelbehälter 39 ausströmenden Trockenluft beeinflusst werden.

Im vorliegenden Ausführungsbeispiel sind Kühlmittelleitungen 49 im Inneren des mitrotierenden Behälterteils 45 gezeigt. Diese Kühlmittelleitungen 49 und insbesondere die üblicherweise aus Metall bestehenden Verbindungsstellen zwischen den Kühlmittelleitungen 49 und einem zentral angeordneten Kühlmittelverteiler sowie die Verbindungsstellen zwischen den Kühlmittelleitungen 49 und der Wand des Sammelbehälters 39 werden durch das geführte Kühlmittel ebenfalls stark gekühlt und unterliegen damit auch der Gefahr von Kondenswasserbildung. Durch die Trockenluftumgebung innerhalb des Sammelbehälters 39 sind diese Kühlmittelleitungen 49 sowie alle anderen innerhalb des Sammelbehälters 39 angeordneten Elemente mit einer Trockenluft beaufschlagt, was die Ausbildung von Kondenswasser an kalten Oberflächen verhindert.

Im Übrigen wird der Innenbereich des Sammelbehälters 39 abgekühlt durch die an den Schalldämpfereinrichtungen 50 entstehende Expansionskälte bei der schlagartigen Entlastung der fertiggeblasenen Behälter 2. Durch diese zusätzliche Kühlung im Innenraum des Sammelbehälters 39 werden die einspeisenden und ausspeisenden Kühlmittelleitungen 49 von außen gekühlt. Die bei der Entlüftung der fertiggeblasenen Behälter 2 anfallende Expansionskälte kann somit zur Reduzierung der aufzuwenden Kühlleistung des durch die Vor- und Rückläufe der Kühlmittelversorgung genutzt werden.

**Bezugszeichenliste**

| | | | |
|---|---|---|---|
| 1 | Vorformling | 33 | Transportmittel |
| 2 | Behälter | 34 | Umlenkrad |
| 3 | Blasstation | 35 | Übergaberad |
| 4 | Blasform | 36 | Umlenkrad |
| 5 | erste Formhälfte | 37 | Übergaberad |
| 6 | zweite Formhälfte | 38 | Übergaberad |
| 7 | Bodenteil | 39 | Verteiler |
| 8 | Hubvorrichtung | 40 | Entlüftungsleitung |
| 9 | Halteelement | 41 | Blasgaszuleitung |
| 10 | Anschlusskolben | 42 | Gasauslass |
| 11 | Reckstange | 43 | Absperrventil |
| 12 | Zylinder | 44 | Signalumsetzer |
| 13 | Primärzylinder | 45 | mitrotierender Behälterteil |
| 14 | Boden | 46 | feststehender Behälterteil |
| 15 | Schlitten | 47 | Kugeldrehverbinder |
| 16 | Sekundärzylinder | 48 | Schalldämpfereinrichtung |
| 17 | Führungsrolle | 49 | Kühlmittelleitungen |
| 18 | Führungselement | 50 | Maschinengestell |
| 19 | erster Träger | | |
| 20 | zweiter Träger | | |
| 21 | Mündungsabschnitt | | |
| 22 | Gewindeeinsatz | A | Rotationsachse des Blasrades |
| 23 | Behälterblase | R | Rotationsrichtung |
| 24 | Heizstrecke | | |
| 25 | Blasrad | | |
| 26 | Vorformlingseingabe | | |
| 27 | Übergaberad | | |
| 28 | Übergaberad | | |
| 29 | Übergaberad | | |
| 30 | Heizstrahler | | |
| 31 | Gebläse | | |
| 32 | Ausgabestrecke | | |

## Patentansprüche

1. Verfahren zur Trockenluftbeaufschlagung einer auf einem rotierenden Blasrad (25) angeordneten Blasform (4) einer Blasstation (3) zur Blasformung von Behältern (2) aus thermoplastischem Kunststoff, **dadurch gekennzeichnet, dass** eine Trockenluft in einem auf dem Blasrad (25) gegenüber der Blasform (4) radial nach innen versetzt angeordneten Sammelbehälter (39) gesammelt wird und die Trockenluft aus dem Sammelbehälter (39) heraus mit bezüglich des Blasrades (25) radial nach außen weisender Richtungskomponente auf eine Oberfläche der Blasform (4) gerichtet abgelassen wird.

2. Verfahren nach Anspruch 1, **dadurch gekennzeichnet, dass** die Trockenluft aus dem Sammelbehälter (39) heraus gleichzeitig oder in steuerbarer Abfolge auf mehrere Blasformen (4) unterschiedlicher auf dem Blasrad angeordneter Blasstationen (3) gerichtet abgelassen wird.

3. Verfahren nach einem der vorangegangenen Ansprüche 1 oder 2, **dadurch gekennzeichnet, dass** die Trockenluft in einem gemeinsamen Sammelbehälter (39) gesammelt wird, aus den heraus die Trockenluft gleichzeitig oder in steuerbarer Abfolge auf sämtliche der auf dem Blasrad (25) angeordneten Blasformen (4) unterschiedlicher Blasstationen (3) gerichtet abgelassen wird.

4. Verfahren nach einem der vorangegangenen Ansprüche, **dadurch gekennzeichnet, dass** als Trockenluft ein für die Blasformung bereitgestelltes Blasgas verwendet wird.

5. Verfahren nach Anspruch 4, **dadurch gekennzeichnet, dass** der Sammelbehälter (39) mit Blasgas befüllt wird, welches nach dem Blasumformen eines erhitzten, innerhalb der Blasform (4) gehaltenen Vorformlings (1) aus einer mit dem Innenraum des fertiggeblasenen Behälters (2) kommunizierenden Entlüftungsleitung (40) entnommen wird.

6. Verfahren nach Anspruch 4, **dadurch gekennzeichnet, dass** der Sammelbehälter (39) mit Blasgas mehrerer auf dem Blasrad (25) angeordneter Blasstationen (3) befüllt wird, wobei das Blasgas jeweils nach dem Blasumformen eines erhitzten, innerhalb der Blasform (4) einer der Blasstationen (3) gehaltenen Vorformlings aus einer mit dem Innenraum des fertiggeblasenen Behälters (2) kommunizierenden Entlüftungsleitung (40) entnommen wird.

7. Verfahren nach einem der vorhergehenden Ansprüche, **dadurch gekennzeichnet, dass** der Sammelbehälter (39) radial außenliegend Gasauslässe (42) aufweist, die bezüglich ihrer Umfangsverteilung und ihrer Höhenanordnung den Blasstationen (3) zugeordnet sind, und aus denen heraus gezielt Trockenluft auf die zu beaufschlagenden Bereiche der Blasstation (3) strömt, insbesondere wobei wenigstens ein Gasauslass (42) in seiner Umfangs- und Höhenanordnung und in seiner Ausrichtung so gewählt ist, dass ein gezielter Trockenluftstrahl auf die Bodenform (7) in deren geöffnetem Zustand abgegeben wird, wobei insbesondere wenigstens ein zusätzlicher Gasauslass (42) auf die Blasformhälften (5, 6) gerichtet ist, wobei insbesondere über die Höhe der Blasform (4) verteilt mehrere Gasauslässe übereinanderliegend angeordnet sind.

8. Vorrichtung zur Blasformung von Behältern (2) aus thermoplastischem Material, die mindestens eine auf einem rotierenden Blasrad (25) angeordnete Blasstation (3) mit einer Blasform (4) aufweist, wobei die Blasstation (3) ein pneumatisches Leitungssystem (41) zur Einleitung eines Blasgases in einen erhitzten, in die Blasform (4) einsetzbaren Vorformling (1) aufweist, **dadurch gekennzeichnet, dass** die Vorrichtung des Weiteren einen auf dem Blasrad (25) relativ zur Blasform (4) radial nach innen versetzt angeordneten Sammelbehälter (39) zur Aufnahme von Trockenluft aufweist, und wobei der Sammelbehälter (39) mindestens einen Gasauslass (42) aufweist, mittels dem die in dem Sammelbehälter (39) aufgenommene Trockenluft aus dem Sammelbehälter (39) heraus mit einer bezüglich des Blasrades (25) radial nach außen weisenden Richtungskomponente auf eine Oberfläche der Blasform (4) gerichtet ablassbar ist.

9. Vorrichtung zur Blasformung von Behältern nach Anspruch 8, **dadurch gekennzeichnet, dass** der Innenraum des Sammelbehälters (39) und der Innenraum des fertiggeblasenen Behälters (2) kommunizierend verbindbar sind.

10. Vorrichtung zur Blasformung von Behältern nach einem der Ansprüche 8 oder 9, **dadurch gekennzeichnet, dass** der Sammelbehälter (39) mehrere Gasauslässe (42) aufweist, mittels derer die in dem Sammelbehälter (39) aufgenommene Trockenluft gleichzeitig oder in steuerbarer Abfolge in Richtung der Blasformen (4) oder in Richtung jeweils eines Blasformteils (5, 6, 7) der Blasformen (4) mehrerer Blasstationen (3) ablassbar ist.

11. Vorrichtung zur Blasformung von Behältern nach einem der Ansprüche 8 bis 10, **dadurch gekennzeichnet, dass** der Innenraum des Sammelbehälters (39) und die Innenräume fertiggeblasener Behälter (2) mehrerer Blasstationen (3) kommunizierend verbindbar sind.

12. Vorrichtung zur Blasformung von Behältern nach einem der Ansprüche 8 bis 11, **dadurch gekennzeichnet, dass** der Sammelbehälter (39) als ein gemeinsamer Sammelbehälter (39) ausgebildet ist, der mehrere Gasauslässe (42) aufweist, mittels derer die in den Sammelbehälter (39) aufgenommene Trockenluft gleichzeitig oder in steuerbarer Abfolge in Richtung der Blasformen (4) oder in Richtung jeweils eines Blasformteils (5, 6, 7) der Blasformen (4) sämtlicher auf dem Blasrad (25) angeordneter Blasstationen (3) ablassbar ist.

13. Vorrichtung zur Blasformung von Behältern nach einem der Ansprüche 8 bis 12, **dadurch gekennzeichnet, dass** der Sammelbehälter (39) aus einem ersten, auf dem Blasrad (25) angeordneten mitrotierenden Behälterteil (45) und einem zweiten, stationär gegenüber dem Blasrad (25) angeordneten feststehenden Behälterteil (46) besteht, wobei die beiden Behälterteile (45, 46) kommunizierend verbunden sind.

14. Vorrichtung zur Blasformung von Behältern nach einem der Ansprüche 8 bis 13, **dadurch gekennzeichnet, dass** als Trockenluft ein für die Blasformung bereitgestelltes Blasgas verwendet wird.

15. Vorrichtung zur Blasformung von Behältern nach einem der Ansprüche 7 bis 14, **dadurch gekennzeichnet, dass** der Sammelbehälter (39) radial außenliegend Gasauslässe (42) aufweist, die bezüglich ihrer Umfangsverteilung und ihrer Höhenanordnung den Blasstationen (3) zugeordnet sind, wobei die Gasauslässe ausgebildet sind, gezielt Trockenluft auf die zu beaufschlagenden Bereiche der Blasstation (3) ausströmen zu lassen, insbesondere wobei wenigstens ein Gasauslass (42) in seiner Umfangs- und Höhenanordnung und in seiner Ausrichtung so gewählt ist, dass ein gezielter Trockenluftstrahl auf die Bodenform (7) in deren geöffnetem Zustand abgebbar ist, wobei insbesondere wenigstens ein zusätzlicher Gasauslass (42) auf die Blasformhälften (5, 6) ausgerichtet ist, wobei insbesondere über die Höhe der Blasform (4) verteilt mehrere Gasauslässe übereinanderliegend angeordnet sind.

16. Vorrichtung nach einem der Ansprüche 8 bis 15, **dadurch gekennzeichnet, dass** die Vorrichtung ausgebildet und eingerichtet ist, ein Verfahren nach einem der Ansprüche 1 bis 7 auszuführen.

## Claims

1. A method for charging a blow mould (4) of a blowing station (3) for the blow moulding of containers (2) made of thermoplastic hard resin with dry air, said blow mould (4) being arranged on a rotating blow moulding wheel (25),
**characterised in that**
- dry air is collected in a collecting vessel (39) that is arranged on the blow moulding wheel (25) and radially offset inwards relative to the blow mould (4), and that the dry air is discharged from the collecting vessel (39), while being directed towards a surface of the blow mould (4) with a directional component facing radially outwards with regard to the blow moulding wheel (25).

2. The method according to Claim 1, **characterised in that** the dry air is discharged from the collecting vessel (39) either simultaneously or in a controllable sequence, while being directed towards a plurality of blow moulds (4) of various blowing stations (3) that are arranged on the blow moulding wheel.

3. The method according to any one of the preceding claims 1 or 2, **characterised in that** the dry air is collected in a common collecting vessel (39) from which the dry air is discharged either simultaneously or in a controllable sequence, while being directed towards all of the blow moulds (4) of various blowing stations (3), said blow moulds (4) being arranged on the blow moulding wheel (25).

4. The method according to any one of the preceding claims, **characterised in that** a blowing gas provided for blow moulding is used as dry air.

5. The method according to Claim 4, **characterised in that** the collecting vessel (39) is filled with blowing gas that, after a heated preform (1) held within the blow mould (4) has been blow moulded, is withdrawn from a vent pipe (40) in communication with an interior space of the completely blown container (2).

6. The method according to Claim 4, **characterised in that** the collecting vessel (39) is filled with blowing gas of a plurality of blowing stations (3) arranged on the blow moulding wheel (25), wherein, after a heated preform held within a blow mould (4) of one of the blowing stations (3) has been blow moulded, the blowing gas is withdrawn from a vent pipe (40) in communication with the interior space of the completely blown container (2).

7. The method according to any one of the preceding claims, **characterised in that** the collecting vessel (39) has radially exterior gas outlets (42) which are allocated to the blowing stations (3) with regard to their peripheral distribution and their height arrangement and from which dry air flows in a targeted manner to the regions of the blowing station (3) that are to be charged, more particularly wherein at least one gas outlet (42) is selected in its peripheral and height arrangement and in its orientation such that a targeted dry air jet is released onto the bottom mould (7) in the latter's open state, more particularly wherein at least one additional gas outlet (42) is directed towards the blow mould halves (5, 6), more particularly wherein a plurality of gas outlets are arranged one above the other and distributed over the height of the blow mould (4).

8. A device for the blow moulding of containers (2) made of thermoplastic material, having at least one blowing station (3) with a blow mould (4), said blowing station (3) being arranged on a rotating blow moulding wheel (25), wherein the blowing station (3) has a pneumatic line system (41) for introducing a blowing gas into a heated preform (1) that can be inserted into the blow mould (4), **characterised in that** the device further has a collecting vessel (39) for receiving dry air that is arranged on a blow moulding wheel (25) and radially offset inwards relative to the blow mould (4), and wherein the collecting vessel (39) has at least one gas outlet (42) by means of which the dry air received in the collecting vessel (39) can be discharged from the collecting vessel (39), while being directed towards a surface of the blow mould (4) with a directional component facing radially outwards relative to the blow moulding wheel (25).

9. The device for the blow moulding of containers according to Claim 8, **characterised in that** the interior space of the collecting vessel (39) and the interior space of the completely blown container (2) can be connected such that they are in communication with each other.

10. The device for the blow moulding of containers according to any one of Claims 8 or 9, **characterised in that** the collecting vessel (39) has a plurality of gas outlets (42) by means of which the dry air received in the collecting vessel (39) can be discharged either simultaneously or in a controllable sequence towards the blow moulds (4) or to one blow mould part (5, 6, 7) each of the blow moulds (4) of a plurality of blowing stations (3).

11. The device for the blow moulding of containers according to any one of Claims 8 to 10, **characterised in that** the interior space of the collecting vessel (39) and the interior spaces of completely blown containers (2) of a plurality of blowing stations (3) can be connected such that they are in communication with each other.

12. The device for the blow moulding of containers according to any one of Claims 8 to 11, **characterised in that** the collecting vessel (39) is formed as a common collecting vessel (39) which has a plurality of gas outlets (42) by means of which the dry air received in the collecting vessel (39) can be discharged either simultaneously or in a controllable sequence towards the blow moulds (4) or towards one blow mould part (5, 6, 7) each of all of the blowing stations (3) arranged on the blow moulding wheel (25).

13. The device for the blow moulding of containers according to any one of Claims 8 to 12, **characterised in that** the collecting vessel (39) consists of a co-rotating first container part (45) arranged on the blow moulding wheel (25) and a fixed second container part (46) that is arranged stationary opposite to the blow moulding wheel (25), wherein the two container parts (45, 46) are connected such that they are in communication with each other.

14. The device for the blow moulding of containers according to any one of Claims 8 to 13, **characterised in that** a blowing gas provided for blow moulding is used as dry air.

15. The device for the blow moulding of containers according to any one of Claim 7 to 14, **characterised in that** the collecting vessel (39) has radially exterior gas outlets (42) which are allocated to the blowing stations (3) with regard to their peripheral distribution and their height arrangement, wherein the gas outlets are configured to have dry air flow in a targeted manner to the regions of the blowing station (3) that are to be charged, more particularly wherein at least one gas outlet (42) is selected in its peripheral and height arrangement and in its orientation such that a targeted dry air jet can be released onto the bottom mould (7) in the latter's open state, more particularly wherein at least one additional gas outlet (42) is directed towards the blow mould halves (5, 6), more particularly wherein a plurality of gas outlets are arranged one above the other and distributed over the height of the blow mould (4).

16. The device according to any one of Claims 8 to 15, **characterised in that** the device is configured and set up to carry out a method according to any one of Claims 1 to 7.

## Revendications

1. Procédé pour soumettre à de l'air sec un moule de soufflage (4) disposé sur une roue de soufflage (25) en rotation d'une station de soufflage (3) destinée au moulage par soufflage de récipients (2) en matière thermoplastique, **caractérisé en ce qu'**un air sec est stocké dans un réservoir (39) disposé radialement vers l'intérieur sur la roue de soufflage (25) en face du moule de soufflage (4) et que cet air sec s'échappe du réservoir (39) en direction d'une surface du moule de soufflage (4) avec une composante directionnelle dirigée radialement vers l'extérieur par rapport à la roue de soufflage (25).

2. Procédé selon la revendication 1, **caractérisé en ce que** l'air sec s'échappe du réservoir (39), simultanément ou selon un ordre réglable, en direction de plusieurs moules de soufflage (4) de différentes stations de soufflage (3) agencées sur la roue de soufflage.

3. Procédé selon l'une des revendications précédentes 1 ou 2, **caractérisé en ce que** l'air sec est stocké dans un réservoir (39) commun duquel l'air sec s'échappe, simultanément ou selon un ordre réglable, en direction de tous les moules de soufflage (4) des différentes stations de soufflage (3) agencées sur la roue de soufflage (25).

4. Procédé selon l'une des revendications précédentes, **caractérisé en ce qu'**un gaz de soufflage tenu à disposition pour le moulage par soufflage est utilisé comme air sec.

5. Procédé selon la revendication 4, **caractérisé en ce que** le réservoir (39) est rempli de gaz de soufflage qui, après le moulage par soufflage d'une préforme (1) chauffée logée à l'intérieur du moule de soufflage (4), est extrait par une conduite de ventilation (40) communiquant avec l'espace intérieur du récipient fini (2).

6. Procédé selon la revendication 4, **caractérisé en ce que** le réservoir (39) est rempli de gaz de soufflage de plusieurs stations de soufflage (3) agencées sur la roue de soufflage (25), le gaz de soufflage étant, après le moulage par soufflage d'une préforme chauffée logée à l'intérieur du moule de soufflage (4) d'une stations de soufflage (3), respectivement extrait par une conduite de ventilation (40) communiquant avec l'espace intérieur du récipient fini (2).

7. Procédé selon l'une des revendications précédentes, **caractérisé en ce que** le réservoir (39) présente des sorties de gaz (42) agencées radialement à l'extérieur, lesquelles sont, de par leur répartition périphérique et leur positionnement en hauteur, respectivement affectées aux stations de soufflage (3) et desquelles s'échappe de façon ciblée de l'air sec en direction des zones voulues de la station de soufflage (3), une sortie de gaz (42) au moins étant notamment choisie, de par son positionnement en hauteur et son orientation, de façon à ce qu'un jet ciblé d'air sec soit projeté vers la pièce de moulage du fond (7) ouverte et au moins une sortie de gaz (42) supplémentaire étant notamment dirigée vers les demi-moules (5, 6), plusieurs sorties de gaz étant notamment disposées l'une au-dessus de l'autre selon un agencement réparti sur la hauteur du moule de soufflage (4).

8. Dispositif de moulage par soufflage de récipients (2) en matériau thermoplastique, ce dispositif présentant au moins une station de soufflage (3) avec un moule de soufflage (4) agencée sur une roue de soufflage (25) en rotation, la station de soufflage (3) présentant un système de conduites pneumatique (41) pour l'adduction d'un gaz de soufflage dans une préforme (1) chauffée pouvant être placée dans le moule de soufflage (4), **caractérisé en ce que** le dispositif présente en outre un réservoir (39) de stockage d'air sec qui, par rapport au moule de soufflage (4), est disposé radialement vers l'intérieur sur la roue de soufflage (25), ce réservoir (39) présentant au moins une sortie de gaz (42) au moyen de laquelle l'air sec stocké dans le réservoir (39) peut s'échapper du réservoir (39) en direction d'une surface du moule de soufflage (4) avec une composante directionnelle dirigée radialement vers l'extérieur par rapport à la roue de soufflage (25).

9. Dispositif de moulage par soufflage de récipients selon la revendication 8, **caractérisé en ce que** l'espace intérieur du réservoir (39) et l'espace intérieur du récipient fini (2) peuvent être reliés de façon communicante.

10. Dispositif de moulage par soufflage de récipients selon l'une des revendications 8 ou 9, **caractérisé en ce que** le réservoir (39) présente plusieurs sorties de gaz (42) au moyen desquelles l'air sec stocké dans le réservoir (39) peut s'échapper simultanément ou selon un ordre réglable en direction des moules de soufflage (4) ou respectivement en direction d'une partie (5, 6, 7) des moules de soufflage (4) de plusieurs stations de soufflage (3).

11. Dispositif de moulage par soufflage de récipients selon l'une des revendications 8 à 10, **caractérisé en ce que** l'espace intérieur du réservoir (39) et les espaces intérieurs des récipients finis (2) de plusieurs stations de soufflage (3) peuvent être reliés de façon communicante.

12. Dispositif de moulage par soufflage de récipients selon l'une des revendications 8 à 11, **caractérisé en ce que** le réservoir (39) est conçu comme réservoir commun (39) qui présente plusieurs sorties de gaz (42) au moyen desquelles l'air sec stocké dans le réservoir (39) peut s'échapper simultanément ou selon un ordre réglable en direction des moules de soufflage (4) ou respectivement en direction d'une partie (5, 6, 7) des moules de soufflage (4) de toutes les stations de soufflage (3) agencées sur la roue de soufflage (25).

13. Dispositif de moulage par soufflage de récipients selon l'une des revendications 8 à 12, **caractérisé en ce que** le réservoir (39) est constitué d'une première partie de réservoir (45) agencée sur la roue de soufflage (25) et tournant avec celle-ci et d'une seconde partie de réservoir (46) fixe agencée vis-à-vis de la roue de soufflage (25), les deux parties de réservoir (45, 46) étant reliées de façon communicante.

14. Dispositif de moulage par soufflage de récipients selon l'une des revendications 8 à 13, **caractérisé en ce qu'**un gaz de soufflage tenu à disposition pour le moulage par soufflage est utilisé comme air sec.

15. Dispositif de moulage par soufflage de récipients selon l'une des revendications 7 à 14, **caractérisé en ce que** le réservoir (39) présente des sorties de gaz (42) agencées radialement à l'extérieur, lesquelles sont, de par leur répartition périphérique et leur positionnement en hauteur, respectivement affectées aux stations de soufflage (3), les sorties de gaz étant conçues pour laisser s'échapper de façon ciblée de l'air sec vers les zones voulues de la station de soufflage (3), une sortie de gaz (42) au moins étant notamment choisie, de par son positionnement en hauteur et son orientation, de façon à ce qu'un jet ciblé d'air sec puisse être projeté vers la pièce de moulage du fond (7) ouverte et au moins une sortie de gaz (42) supplémentaire étant notamment dirigée vers les demi-moules (5, 6), plusieurs sorties de gaz étant notamment disposées l'une au-dessus de l'autre selon un agencement réparti sur la hauteur du moule de soufflage (4).

16. Dispositif selon l'une des revendications 8 à 15, **caractérisé en ce que** le dispositif est conçu et aménagé pour mettre en oeuvre un Procédé selon l'une des revendications 1 à 7.
